Europäisches Patentamt

European Patent Office

Office européen des brevets

(19)

(11) Publication number: **0 171 614 B1**

# EUROPEAN PATENT SPECIFICATION

(12)

(45) Date of publication of patent specification: **29.05.91**  (51) Int. Cl.⁵: **G02B 6/38**

(21) Application number: **85108725.4**

(22) Date of filing: **12.07.85**

(54) **Optical fiber connecting coupler.**

(30) Priority: **13.07.84 JP 146667/84**

(43) Date of publication of application:
**19.02.86 Bulletin 86/08**

(45) Publication of the grant of the patent:
**29.05.91 Bulletin 91/22**

(84) Designated Contracting States:
**DE FR GB IT NL SE**

(56) References cited:
**EP-A- 0 033 408**
**DE-U- 7 517 996**
**DE-U- 8 212 379**
**GB-A- 2 008 274**
**GB-A- 2 118 322**

**PATENT ABSTRACTS OF JAPAN, vol. 5, no.
201 (P-94)[873], 19th December 1981; & JP -
A - 56 122 004 (HIROSHI HANADA) 25-09-1981**

**PATENT ABSTRACTS OF JAPAN, vol. 7, no.
73 (P-186)[1218], 25th March 1983; & JP - A -
58 2814 (NIPPON DENSHIN DENWA KOSHA)
08-01-1983**

(73) Proprietor: **SUMITOMO ELECTRIC INDUSTRIES
LIMITED
No. 15, Kitahama 5-chome, Higashi-ku
Osaka-shi, Osaka 541(JP)**

(72) Inventor: **Kakii, Toshiaki c/o Yokohama Works
of Sumitomo
Electric Industries, Ltd. No. 1, Taya-cho
Totsuka-ku Yokohama-shi Kanagawa(JP)**
Inventor: **Matsuno, Koichiro c/o Yokohama
Works of Sumitomo
Electric Industries, Ltd. No. 1, Taya-cho
Totsuka-ku Yokohama-shi Kanagawa(JP)**

(74) Representative: **Patentanwälte Grünecker,
Kinkeldey, Stockmair & Partner
Maximilianstrasse 58
W-8000 München 22(DE)**

## Description

### 1. Field of the Invention

The present invention relates to optical fiber couplers for interconnecting optical fibers, and more particularly to those couplers in which optical fibers, exposed by removing end portion coatings, are inserted into optical fiber insertion holes from opposite ends, the insertion holes having inner diameters slightly large than the fiber diameters.

### 2. Description of the Prior Art

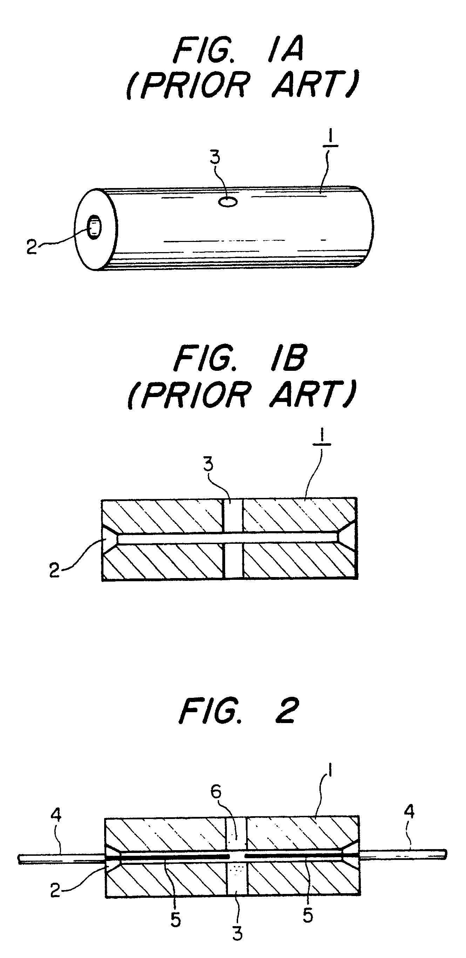

FIGURE 1A is a perspective view and FIGURE 1B is a longitudinal cross-sectional view of a conventional optical fiber connecting sleeve 1. Sleeve 1 is made of ceramics and has a length of 10 mm. Sleeve 1 is provided with an optical fiber insertion hole 2 having an internal diameter of 0.128mm for an optical fiber diameter of 0.125 mm. Sleeve 1 has also a hole 3 at its center portion in which matching oil may be inserted.

To couple optical fibers using sleeve 1, usually, optical fibers 5 are exposed by removing the end portion coatings of the respective coated optical fibers 4. Then the respective ends of optical fibers 5 are cut to be mirror faces and the respective optical fibers 5 are inserted into optical insertion hole 2 of sleeve 1 from opposite ends thereof. A matching agent is then injected into hole 3 to prevent Fresnel reflection.

A first problem with sleeve 1 is that it is impossible to make visual confirmation as to whether the respective end faces of optical fibers 5 abut against each other in sleeve 1. Instead proper abutment can be determined based only on feel. Therefore, in good cases, the loss in the connection portion is 0.1 dB or less, but in bad cases, the loss often is 3 dB or more. There is described in JP-A-56 122 004, an optical fiber connector which also has an opening at the centre portion thereof but to further aid connection a lens is attached to this opening. However, adding such a lens adds to the cost of the device.

A second problem is that matching agent may flow out from hole 3. An experiment has shown that an initial loss of 0.1 dB increased to 0.4 dB when vibrations having a frequency of 10 Hz and an amplitude of ±5 mm were applied for 200 hours. When matching agent was added again, the loss returned to 0.1 dB.

### Summary of the Invention

An object of the present invention is to provide an improved optical fiber connecting coupler in which the aforementioned problems are eliminated. That is, the coupler of the present invention connects optical fibers with little loss which is maintained for an extended period.

According to the optical fiber coupler of the present invention, a sleeve for connecting the optical fibers has a cylindrical shape and an axial passage therethrough. The passage has a diameter slightly larger than the diameter of the optical fibers being connected. The sleeve defines a cut-away portion in its outer periphery of its central portion. The cut-away portion extends radially inward to expose the passage through the sleeve. The width, in a direction perpendicular to the longitudinal axis of the sleeve, across the opening into the passage provided by the cut-away portion is less than the diameter of the optical fibers. The cut-away portion is sufficiently large to permit visual inspection of optical fibers in the passage. A housing surrounds the sleeve and seals the cut-away portion by a portion of the housing extending into the cut-away portion.

In fact, the length of the cut-away portion in the longitudinal direction may advantageously be at least 5 times the outer diameter of the optical fibers. It is also advantageous that an adhesive agent be disposed in the cut-away portion, the adhesive agent being selected to perform a matching function between the optical fibers.

The housing may have two halves with a spring sleeve holding the halves together. One of the halves may have pressure sensitive adhesive on an inner peripheral surface at opposite ends to cause the optical fibers to stick to the housing. In fact, it is advantageous that a combination of two pressure sensitive adhesive layers separated by a foam layer be employed at opposite ends of the housing. One of the housing halves may include a groove for guiding the optical fibers.

### BRIEF DESCRIPTION OF THE DRAWINGS

These and other objects in advantages of this invention will become more apparent or more readily appreciated from the following detailed description of the presently preferred exemplary embodiments of this invention, taken in conjunction with the accompanying drawings, of which:

FIGURE 1A is a perspective view of a well-known optical fiber coupler;
FIGURE 1B is a longitudinal cross-sectional view of the coupler of FIGURE 1;
FIGURE 2 is a view similar to FIGURE 1B with optical fibers inserted;
FIGURE 3A is a perspective view of an optical coupling sleeve in accordance with the present invention;

FIGURE 3B is a longitudinal cross-sectional view of the sleeve of FIGURE 3A;

FIGURE 3C is a transverse cross-sectional view of the sleeve of FIGURE 3A;

FIGURE 4 is a graph relating notch length to fiber extraction force;

FIGURE 5A is a longitudinal cross-sectional view of a coupler in accordance with the present invention including a sleeve;

FIGURE 5B is a longitudinal cross-sectional view of the upper housing half illustrated in FIGURE 5A;

FIGURE 5C is a transverse cross-sectional view of the lower housing half, sleeve and optical fiber; and

FIGURE 6 is a perspective view of a spring sleeve in accordance with the present invention.

## DETAILED DESCRIPTION OF THE PRESENTLY PREFERRED EXEMPLARY EMBODIMENT

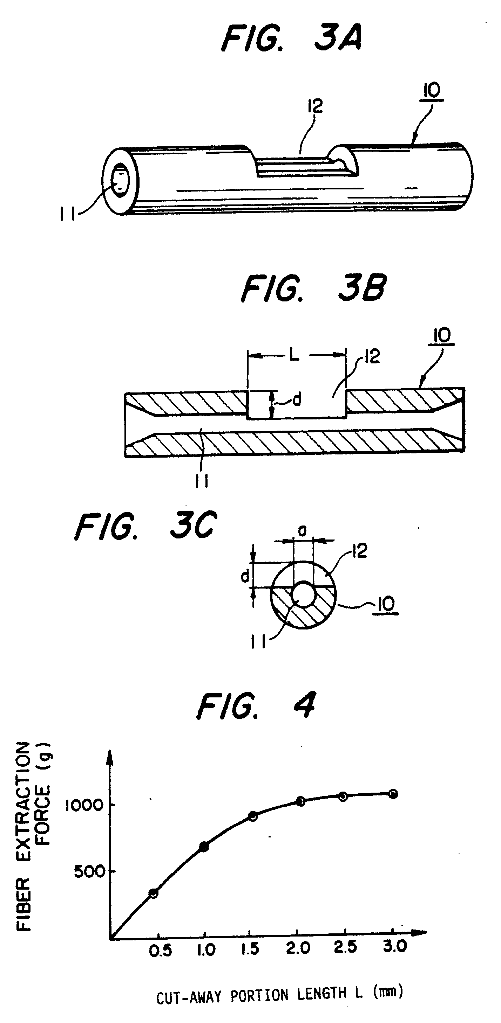

Referring to the drawings, the optical fiber coupler according to the present invention will be described. As illustrated in FIGURES 3A-3C, a connecting sleeve 10 is generally cylindrical and hollow. A cut-away portion 12 is provided at a central portion of sleeve 10 in its outer periphery. As shown in FIGURES 3B and 3C cut-away portion 12 has a depth d sufficient to expose the passage within sleeve 10. As shown in FIGURE 3C the width, in a direction perpendicular to the longitudinal axis of sleeve 10, across the opening into the passage within sleeve 10, is defined as a. Width a is smaller than the outer diameter of an optical fiber.

It is desirable that the axial length L of cut-away portion 12 be five or more times longer than the outer diameter of optical fiber 5. FIGURE 4 illustrates the relationship between the force for extracting the optical fiber from sleeve 10 and the axial length L of cut-away portion 12 when adhesive is applied to optical fibers 5 in cut-away portion 12 as will be described below. An extraction force of at least 500 g has been determined desirable to prevent separation of the optical fiber from sleeve 10. Therefore, the value of L should be equal to or larger than 0.6 mm so that the optical fiber is exposed by a length L five or more times the outer diameter of optical fiber 5 when the latter is 0.125 mm.

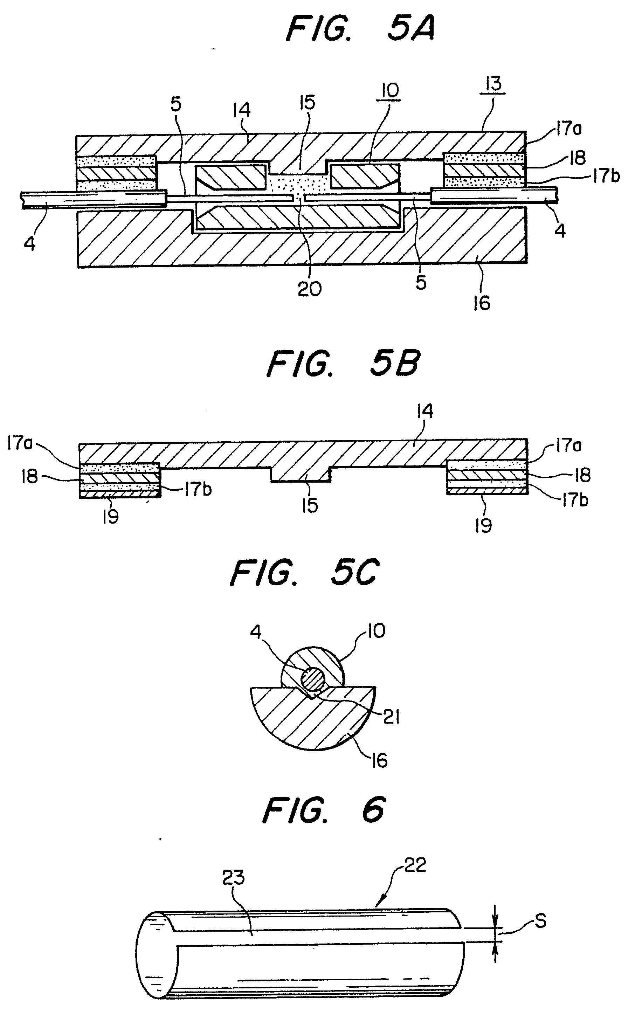

FIGURE 5A illustrates connecting sleeve 10 in which optical fibers 5 have been connected. Sleeve 10 is accommodated in a housing having upper and lower parts 14 and 16. Where optical fibers 5 abut, an adhesive agent 20 is injected into sleeve 10 through cut-away portion 12 so as to fix the position of optical fibers 5.

Upper housing part 14 is provided at its center portion with a seal portion 15 which extends into cut-away portions 12 to thereby prevent adhesive agent 20 from flowing out. The inner peripheral surfaces at opposite ends of upper housing part 14 are provided with pressure sensitive adhesive agent layers so that coated portions 4 of the respective optical fibers are fixed by these pressure sensitive adhesive agent layers when the upper and lower housing parts 14 and 16 are assembled. As illustrated in FIGURE 5B, each of the inner peripheral surfaces at opposite ends of upper housing part 14 is provided with a first adhesive agent layer 17a, a foaming agent layer 18, a second adhesive agent layer 17b and a separator 19. In use, separator 19 is removed so that second adhesive layer 7b sticks to coated optical fiber 4. Lower housing part 16 has a guide groove 21 for holding each of coated optical fibers 4 as shown in FIGURE 5C.

Further, at the outer periphery of housing parts 14 and 16, a spring sleeve 22 (see FIGURE 6) having a slit 23 surrounds housing parts 14 and 16 to fix and protect them. By selecting the width s of slit 23 to be larger than the outer diameter of coated optical fibers 4, spring sleeve 22 can be easily positioned around housing parts 14 and 16 even after the housing parts 14 and 16 have been assembled.

As an example a connecting sleeve 10 as shown in FIGURES 3A-3C was produced made of ceramics. Sleeve 10 had a length of 10 mm, an outer diameter of 2 mm, and an optical fiber insertion hole of 0.128 mm. At a center portion in the outer periphery of the sleeve, cut-away portion 12 was formed having a length (L) of 2 mm and a depth d such that the exposed portion width a was 0.1 mm.

Coated optical fibers 4 were connected using sleeve 10, with the diameter of each optical fiber 5 being 0.125 mm and the outer diamter of coated optical fiber 4 being 0.9 mm. The coating at the end portion of each coated optical fiber 4 was removed to expose optical fiber 5 at that portion, and the end portion was cut by an optical fiber cutter to obtain a mirror end face. Each optical fiber 5 was inserted into an optical fiber insertion hole of connecting sleeve 10. Since cut-away portion 12 had a length of 2 mm, the abutment between optical fibers 5 could be visually confirmed. The abutment could also be easily observed with a microscope of about 20 power magnification or a loupe or magnifying glass.

An instant adhesive agent 20 of a cianoacrylate group was dropped through cut-away portion 12 to optical fibers 4 which were positioned in a manner as described above. By dropping adhesive agent 20, it is possible to prevent a Fresnel loss from occurring, to improve the loss to be 0.2 - 0.3 dB, and to fix optical fibers 5 to connecting sleeve 10.

Next, connecting sleeve 10, in which optical fibers 5 were connected, was positioned in a housing having upper and lower parts 14 and 16 as shown in FIGURES 5A-5C. At each of the opposite ends of upper housing part 14, four-layer pressure sensitive arrangement was provided composed of a first adhesive agent layer 17a, a foaming agent layer 18, a second adhesive agent layer 17b and a separator 19, as shown in FIGURE 5B. Separator 19 was removed and upper and lower housing parts 14 and 16 were pressed against each other so as to fix coated optical fibers 4. In this example, the thickness of the layers was selected to be about 1.3 mm. A material of an acrylic-group was used as the pressure sensitive adhesive agent, and a polyethylene foam material was used as the foam agent. By accommodating sleeve 10 in the housing in such a manner as described above, the optical fiber extracting strength could be improved to 1.5 kg or more. The housing had a length of about 50 mm and an outer diameter of about 4 mm.

A spring sleeve 22 having a slit 23 was attached on the outer periphery of the housing so that firm and stable fixing of the housing could be obtained. At that time, the outer diameter of the spring sleeve was about 4.5 mm.

The average loss through optical fibers thus connected was about 0.23 dB with n = 50 and the maximum loss was 0.53 dB. Moreover, after application of vibrations with a frequency of 10 Hz and an amplitude of ± 5 mm for 200 hours, the average loss was 0.29 dB with no substantial change.

According to the optical fiber connecting coupler of the present invention, it is possible to perform positional adjustment of the gap between the end surfaces of optical fibers in the sleeve while visually observing them. At the same time a stable connection is provided exhibiting a loss not exceeding 1 dB, while having a low average loss of 0.23 dB. Also matching agent can be maintained in the sleeve for a long term by the use of an adhesive agent having a matching function.

Moreover, the sleeve connection can be protected by the use of the housing and the coated optical fibers of the optical fibers can be fixed with ease by the pressure sensitive adhesive agent so that a stable connection can be maintained.

Although only a single preferred embodiment of this invention has been described in detail above, those skilled in the art will readily appreciate that many modifications are possible in the preferred embodiment without materially departing from the novel teachings and advantages of this invention. For example, upper housing part 14 may be provided with reversely tapered pawls for the purpose of preventing opening.

Accordingly, all such modifications are intended to be included within the scope of this invention as defined by the following claims.

## Claims

1. An optical fiber coupler comprising: a sleeve (10) having a cylindrical shape and an axial passage (11) therethrough, said passage having a diameter slightly larger than the diameter of optical fibers being coupled, said sleeve defining a cut-away portion (12) in an outer periphery of a central portion of said sleeve, said cut-away portion (12) extending radially inward to expose said passage, the width (a), in a direction perpendicular to the longitudinal axis of said sleeve, across the opening into said passage provided by said cut-away portion, being less than the diameter of said optical fibers, said cut-away portion having a size to permit visual inspection of optical fibers in said passage; **characterised** in further comprising a housing (13) surrounding said sleeve and sealing said cut-away portion by including a portion (15) extending into said cut-away portion.

2. A coupler as in claim 1, wherein said cut-away portion has an axial length at least 5 times the diameter of said optical fibers.

3. A coupler as in claim 1 or 2 further comprising adhesive material disposed in said cut-away portion said adhesive material being selected to provide a matching function.

4. A coupler as in claims 1, 2 or 3 wherein said housing includes first (14) and second halves (16) and pressure-sensitive adhesive layers (17a, 17b) disposed at opposite ends on inner peripheral surfaces of at least one of said housing halves.

5. A coupler as in claim 4 further comprising a foam layer (18) disposed on said pressure-sensitive adhesive layer and another pressure-sensitive adhesive layer disposed on said foam layer.

6. A coupler as in claim 4 or 5 wherein one of said halves defines a groove (21) for guiding said optical fibers.

7. A coupler as in claims 1 to 6 further comprising a spring sleeve (22) surrounding said housing.

## Revendications

1. Connecteur pour fibres optiques comprenant : un manchon (10) présentant une forme cylindrique et un passage axial (11) qui le traverse, ledit passage ayant un diamètre tres légèrement supérieur au diamètre des fibres optiques qu'il sagit de connecter, ledit manchon définissant un évidement (12) dans la périphérie intérieure d'une portion centrale dudit manchon, ledit évidement (12) se prolongeant radialement vers l'intérieur pour mettre le passage à jour, la largeur (a), mesurée dans une direction perpendiculaire à l'axe longitudinal dudit manchon, d'un bord à l'autre de l'ouverture qui donne dans ledit passage qui est formée par ledit évidement, étant inférieure au diamètre desdites fibres optiques, ledit évidement étant d'une dimension qui permet l'inspection visuelle des fibres optiques dans ledit passage, caractérisé en ce qu'il comprend en outre un boîtier (13) qui entoure ledit manchon et ferme ledit évidement, grâce au fait qu'il comprend une portion (15) qui pénètre dans ledit évidement.

2. Connecteur selon la revendication 1 dans lequel ledit évidemment possède une longueur axiale au moins égale à cinq fois le diamètre desdits fibres optiques.

3. Connecteur selon la revendication 1 ou 2, comprenant en outre une matière adhésive disposée dans ledit évidement, ladite matière adhésive étant choisie pour assurer une fonction d'adaptation de l'indice.

4. Connecteur selon une des revendications 1, 2 et 3, dans lequel ledit boîtier comprend une première moitié (14) et une deuxième moitié (16), ainsi que des couches d'adhésif sensible à la pression (17a, 17b) disposées aux extrémités opposées sur les surfaces périphériques intérieures d'au moins l'une desdites moitiés du boîtier.

5. Connecteur selon la revendication 4, comprenant en outre une couche de mousse (18) disposée sur ladite couche d'adhésif sensible à la pression et une autre couche d'adhésif sensible à la pression disposée sur ladite couche de mousse.

6. Connecteur selon la revendication 4 ou 5, dans lequel une desdites moitiés définit une rainure (21) pour guider lesdites fibres optiques.

7. Connecteur selon les revendications 1 à 6, comprenant en outre un manchon élastique (22) qui entoure ledit boîtier.

## Ansprüche

1. Kupplung zum Verbinden optischer Fibern mit einer zylinderförmigen Muffe (10), die mit einem sich axial hindurch erstreckenden Kanal (11) versehen ist, der einen Durchmesser aufweist, der etwas größer ist als der Durchmesser optischer Fibern, die gekuppelt werden, wobei die Muffe einen weggeschnittenen Abschnitt (12) in einem Außenumfang eines zentralen Abschnitts der Muffe festlegt, der weggeschnittene Abschnitt (12) sich radial nach innen zum Freilegen des Kanals erstreckt, die Breite (a) in einer Richtung senkrecht zur Längsachse der Muffe über die Öffnung in den Kanal hinein, der durch den weggeschnittenen Abschnitt ausgebildet wird, geringer ist als der Durchmesser der optischen Fibern, und der weggeschnittene Abschnitt eine Größe aufweist, die ausreicht, eine visuelle Überprüfung von optischen Fibern in dem Kanal zu gestatten, dadurch gekennzeichnet, daß weiterhin ein Gehäuse (13) vorgesehen ist, welches die Muffe umgibt und den weggeschnittenen Abschnitt abdichtet durch Umfassen eines sich in den weggeschnittenen Abschnitt hinein erstreckenden Abschnitts (15).

2. Kupplung nach Anspruch 1, bei welcher der weggeschnittene Abschnitt eine Axiallänge aufweist, die zumindest das Fünffache des Durchmessers der optischen Fibern beträgt.

3. Kupplung nach Anspruch 1 oder 2, bei welcher weiterhin ein in dem weggeschnittenen Abschnitt angeordnetes Klebematerial vorgesehen ist , das zur Bereitstellung einer Anpaßfunktion ausgewählt ist.

4. Kupplung nach Anspruch 1, 2 oder 3, bei welcher das Gehäuse eine erste (14) und eine zweite Hälfte (16) aufweist sowie druckempfindliche Klebeschichten (17a, 17b), die an entgegengesetzten Enden auf inneren Umfangsoberflächen zumindest einer der Gehäusehälften angeordnet sind.

5. Kupplung nach Anspruch 4, die weiterhin eine Schaumschicht (18) aufweist, die auf der druckempfindlichen Klebeschicht angeordnet ist, sowie eine weitere auf der Schaumschicht angeordnete druckempfindliche Kleberschicht.

6. Kupplung nach Anspruch 4 oder 5, bei welcher eine der Hälften eine Nut (21) zum Führen der optischen Fibern ausbildet.

7. Kupplung nach Anspruch 1 bis 6, die weiterhin eine das Gehäuse umgebende Federhülse (22) aufweist.

# FIG. 1A
## (PRIOR ART)

# FIG. 1B
## (PRIOR ART)

# FIG. 2

## FIG. 3A

## FIG. 3B

## FIG. 3C

## FIG. 4

FIBER EXTRACTION FORCE (g)

CUT-AWAY PORTION LENGTH L (mm)

8

# FIG. 5A

# FIG. 5B

# FIG. 5C

# FIG. 6